Europäisches Patentamt

European Patent Office

Office européen des brevets

(11) Publication number: **0 235 875**
**B1**

# EUROPEAN PATENT SPECIFICATION

(45) Date of publication of patent specification: **23.05.90**

(21) Application number: **87300073.1**

(22) Date of filing: **06.01.87**

(51) Int. Cl.⁵: **A 01 N 25/14, A 01 N 25/34, A 01 N 63/00**

(54) Pesticidal composition for water treatment.

(30) Priority: **06.01.86 GB 8600190**

(43) Date of publication of application:
**09.09.87 Bulletin 87/37**

(45) Publication of the grant of the patent:
**23.05.90 Bulletin 90/21**

(84) Designated Contracting States:
**BE DE ES FR GB GR IT LU NL**

(56) References cited:
**EP-A-0 085 376**
**EP-A-0 127 773**
**FR-A-2 290 844**
**FR-A-2 533 415**
**GB-A- 650 132**
**US-A-3 667 929**
**US-A-4 166 112**

(73) Proprietor: **NOVO-NORDISK A/S**
**Novo Allé**
**DK-2880 Bagsvaerd (DK)**

(72) Inventor: **Bradbury, Roderick Stephen**
**165 Overdown Road**
**Tilehurst Reading Berkshire (GB)**
Inventor: **Quinland, Raymond John**
**27 Northcourt Avenue**
**Reading RG2 7HE Berkshire (GB)**
Inventor: **Most, Brian Harold**
**34 Penwood Heights Burghclere**
**Newbury Berkshire (GB)**

(74) Representative: **Ablewhite, Alan James et al**
**MARKS & CLERK 57/60 Lincoln's Inn Fields**
**London WC2A 3LS (GB)**

Courier Press, Leamington Spa, England.

**Description**

This invention relates to pesticidal formulations for control of water-borne insect pests, in particular mosquitoes and blackfly and other water-borne pests e.g. invasive plants, in particular water hyacinth.

The control of water borne pests such as mosquitoes and blackfly, where the larval and pupal forms live in water, is difficult for a number of reasons. Firstly, the use of generally toxic pesticides is contraindicated in water containing other valued species. For this reason, a biological pesticide derived from *Bacillus thuringiensis,* especially *B. thuringiensis* var. israelensis, is of great interest. The bacteria contain a proteinaceous crystal toxin which is specifically toxic to mosquito species (Culicidae) and blackfly species (Simulidae). In particular, the endotoxin produced by *B. thuringiensis* var. israelensis serotype H—14 is used for this purpose and is specific to those species of insect which have (a) an alkaline gut (pH to 9) and (b) an enzyme complement suitable for degradation of the endotoxin crystal. In practice this means mosquitoes and blackfly only. Indeed, the *B. thuringiensis* pesticide is not harmful to organisms of the following types: Amphibia; Crustacea; Molluscs; Ephemeroptera; Hemiptera; Odonata, fish, annelid worms, flatworms, Diptera, Coleoptera, Hymenoptera, and Trichoptera. Furthermore, the toxin is completely non-toxic to humans and mammals and thus is entirely safe for use in drinking water supplies.

The problem of the distribution of pesticides in water has been addressed in a number of ways, although generally these have attempted to provide an even distribution of the pesticide throughout the water. Thus, FR—A—2 290 844 describes effervescent granules which disperse pesticides such as Drepamon or Cidial throughout water. US A 3 677 929 describes the formation of aqueous dispersions of pesticides, e.g. vermicides and algaecides. EP 127 773 A1 describes effervescent dispersable tablets containing pesticides, which again disperse throughout water to form an aqueous suspension for spraying etc.

However, a second problem is that the larvae of mosquitoes and blackfly feed at or near the surface of the water. This means that the pesticide must be supplied in that region. It is of no use if the pesticidal composition sinks to the bottom of the water or is diluted and dispersed throughout the water system.

In order to solve these problems, solid formulations of *B. thuringiensis* toxins have comprised either wettable powders and the like for spraying onto water surfaces, or coated buoyant granules, in which the active material is adhering to the exterior of small particles which are of an appropriate density to remain at or near the water surface. Typically, the granules used are based on maize seeds (corn), porous clay or perlite granules and granules based on sand.

However, these granules have their own shortcomings. Floating granules are prone to wind drift, causing them to be driven towards the edges of open water, rather than remaining dispersed evenly across the water surface. Also, their relative lightness results in a tendency for them to lodge on foliage and thus not reach the water surface at all. On the other hand, coated sand granules tend to be too dense and do not spend long enough at the water surface.

An alternative solid formulation consists of "briquettes" which are claimed to have an activity for up to 30 days. In practice, these are found to give irregular or patchy control.

Apart from solid formulations, as described above, liquid formulations of *B. thuringiensis* have been proposed. For example, SU 369891—S describes a stabilised suspension of *B. thuringiensis* comprising an aqueous culture containing added oxyethylated di- and tri- esters of pentaerythritol with 6—12 carbon atom carboxylic acids. The non-ionic surfactant helps to prevent the bacilli from sinking. US 4166112 describes a buoyant colloidal suspension of *B. thuringiensis* formed from a suspension of spores in dioxan containing an oil such as jojoba oil. However, the aqueous liquid formulations are heavy and require a whole cell culture rather than just the spores or the toxin crystals themselves, and solvents such as dioxan are undesirably toxic to aquatic species.

The formulation must thus be able to dispense the pesticidal ingredient(s) at or near the water surface and so must, in the water, exhibit a suitable degree of buoyancy and dispersibility. At the same time, it must not be prone to wind drift. We have now found that these requirements can be met by formulating the pesticidal ingredient(s) in a disintegrating effervescent presentation: the effervescence provides buoyancy, keeping the materials at or near the surface of the water, and also aids dispersion of the contents.

According to the present invention, therefore, there is provided a pesticidal formulation for the direct treatment of water infested with water-borne insect or plant pests comprising a controlled-release formulation formulated as tablets, granules or the like containing in their interior

a. an effective amount of at least one biological pesticidal ingredient;
b. at least one effervescence-initiating component; and
c. at least one surface active dispersant;
d. a lubricant;
e. a binder;
f. a disintegrant; and
g. a low density buoyancy aid

wherein said biological pesticidal ingredient is a *Bacillus thuringiensis* var. *israelensis* preparation and wherein said pesticidal formulation is formulated so as to disperse said pesticidal ingredient at or near the surface of the water to be treated.

Dispersion occurs on the breakup of the tablet or granule and is ensured by the inclusion of a surface active dispersant, e.g. an anionic surfactant such as an alkylbenzene sulphonate, an alcohol sulfate, an ether sulfate, a phosphate ester, a sulphosuccinate, an alkane sulphonate, an olefin sulphonate or petroleum sulphonate, a sarcosinate or a taurate. The dispersant of choice is sodium dioctylsulpho-succinate.

The effervescence-initiating components can comprise any conventional effervescent couple, for example a solid acid and a carbonate or bicarbonate, for example citric or malic acid together with sodium bicarbonate. The pesticide, the effervescence-initiating components and the surface active dispersant are formulated into suitable solid bodies, for example tablets of 0.1 to 5 g weight e.g. 0.2 to 1 g; and granules of about 5 to 20 mg weight, e.g. 7.5 to 15 mg.

Buoyancy is considerably helped by the inclusion of low density buoyancy aids, for example, colloidal silica. Dispersion is improved by inclusion of a tablet disintegrant such as polyvinylpyrrolidone. In addition, tablets contain lubricants, binders and, if desired colouring agents, as required.

Granules can be formed by granulation of the pesticidal, effervescence-initiating and dispersant ingredients mentioned above in a paste formed from conventional granulating material, e.g. a filler such as china clay and a non-aqueous fluid, for example a high molecular weight polyethylene glycol, such as PEG 4,000. Water free conditions are of course essential, in order to avoid activation of the effervescence-initiators.

In a modification of the formulation according to this invention, small tablets or granules can be loaded into an intermittent release cartridge or the like so that over a period of days or weeks the water progressively comes in contact with batches of the tablets or granules. For example, a water-resistant cartridge with an open end can be charged with a number of tablets or granules. These can then be covered by a water soluble seal and another batch of tablets or granules loaded in followed by another watersoluble seal etc. so that the cartridge comprises a sequence of compartments each containing tablets or granules and separated from each other by a water soluble seal. The cartridge should be so constructed that it sinks to the bottom of the water supply. After a short time, the water will dissolve away the first seal and the first batch of tablets or granules will be released and will rapidly rise to the surface as they effervesce and disintegrate. In due course the second seal will be dissolved and a fresh batch of tablets or granules will be released and so on. In this way, reinfestation of the water supply can be prevented without the need for additional visits to treat the water.

The pesticide is the toxin derived from *Bacillus thuringiensis* var. israelensis, in particular strain H—14. As this pesticide is highly selective, the compositions according to the present invention can be used to treat river and pond water where the fish or other animal life must be protected. Furthermore, since the material is non-toxic to humans and mammals, it can be safely used to treat drinking water supplies.

Field trials of granules containing a *B. thuringiensis* var. israelensis H—14 preparation were carried out as follows.

The experimental site was a drainage ditch which ran from the south to the sea in the north. The water within the ditch was stagnant except after heavy rain when it began to flow into the sea.

## Methods

The ditch was divided into five sections with wooden planks. Each section was made water-tight by packing mud around each of the planks. The surface area of the water in each of the sections was obtained by measuring the width of the ditch at water level at intervals of 1 m, calculating the mean width and multiplying by the length of the section. Water samples were taken for subsequent analysis of pH, turbidity, and salinity. The air temperature and water temperature 5 cm beneath the surface were measured with a thermometer. The extent of surface vegetation, 'scum' etc. was estimated. A sample of larvae were taken and preserved in alcohol for identification. Ten dips were taken with a ladle (350 ml capacity with a 13 cm diameter rim) at approximately 0.5 m intervals in each section of the ditch. The number of each instar and whether they were alive or dead were recorded.

The northern--most section of ditch (nearest the sea) was labelled Section A, and so on to Section E, the most southerly (inland) section. Each section was treated as below:

Section A:    treated with 30% less than recommended dose granules

Section B:    treated with standard recommended dose granules (see below)

Section C:    treated with 30% more than recommended dose granules

Section D:    untreated Control

Section E:    untreated, to be used as a larvae stock for bioassays.

The relevant quantities of granules were determined for each section according to the water surface

3

EP 0 235 875 B1

area and the required treatment. The granules were applied evenly over the water surface in each of the three treated sections. After time intervals of 30 minutes, 1 hour, 2 hours, 24 hours, 48 hours and 96 hours after treatment, five 80 ml samples of water were taken at 0.5 m intervals from sections A, B, C and D using a small ladle (40 ml capacity with a 6 cm diameter rim). Each sample was placed in a plastic bioassay (250 ml capacity, 8.5 cm diameter and 6 cm deep). The samples were sheltered from wind, rain and direct sunlight at outdoor temperature. Into each sample were placed 10 larvae (1st, 2nd and 3rd instars) obtained from the untreated section E. These samples were inspected at 24 hours, 48 hours and 96 hours and the number of dead larvae per sample counted.

As well as conducting bioassays, at 24 hours, 48 hours and 96 hours ten dips were taken from each of the sections, A, B, C and D as described above. The number of each instar and whether they were dead or alive was noted.

Results

The surface of each of the sections of the ditch were covered with a thick mass of green algae. It was estimated that this algae covered 40% of the surface area of section A, 50% of section B, 50% of section C and 60% of section D. The bed of the ditch was composed of black smelly mud, an indication of high organic content. Crustacea such as *Cyclops* were abundant in each section indicated at high bacterial presence. The pH of the water was found to be 8.2. Turbidity was measured using a spectrometer at a wavelength of 315 nm and the sample was found to have an average absorbance value of 0.269, and an average light transmission value of 52.5% relative to distilled water. Salinity measured by the hydrometric method was found to be 5.9 parts/1000. The temperature varied greatly throughout the trial.

As the water surface of each of the sections was densely covered with green algae, and fourth instar larvae were present, it was decided to use the higher recommended dose of 2g granules per 10m². The granules contained 600 ITU/mg (ITU reference standard 1PS—78 (WHO) — see Bulletin of the ESA, Spring 1984 pp 26—29). The surface areas of the sections and the quantities of the granules used were calculated as:

|  | Surface Area | Recommended dose | Dose Applied |
|---|---|---|---|
| Section A | 2.21m² | 0.442g | 0.31g (30% less than recommended) |
| Section B | 1.86m² | 0.372g | 0.37g (recommended dose) |
| Section C | 1.72m² | 0.344g | 0.45g (30% more than recommended dose |
| Section D | 2.24m² | 0.448g | 0.00g (control) |

Results from dipping assays

It is clear from the following table that the proportion of dead larvae per dip increased after treatment in the treated sites, the control site remaining relatively free of dead larvae. The overall number of larvae per dip also decreased, which at first sight could be interpreted as being the result of the treatment. However, the mean number of larvae per dip in the control pond also decreased. This was largely due to the drying up of the control pond and the larvae being caught in the mud or sheltering under the algae to prevent overheating and desiccation. The water level in sections A and B did not change to any noticable extent, however the level and surface areas of section C and D did change significantly. The drying up of

4

these sections made sampling difficult and will have affected the number and distribution of larvae, so some inaccuracy will be found in the calculations of the effectiveness of the treatments.

```
        Live larvae present in the treated section relative to
                          the control pond (%)
```

| | | Section A | Section B | Section C |
|---|---|---|---|---|
| Prior to Treatment | Actual | 44.8 | 59.8 | 60.3 |
| | Corrected | 100.0 | 100.0 | 100.0 |
| 24h after Treatment | Actual | 22.9 | 15.5 | 28.7 |
| | Corrected | 51.1 | 38.5 | 47.6 |
| 48h after Treatment | Actual | 18.8 | 14.6 | 10.4 |
| | Corrected | 41.2 | 24.4 | 17.3 |
| 96h after Treatment | Actual | 28.6 | 19.0 | 14.3 |
| | Corrected | 63.7 | 31.9 | 23.7 |

The following formula (an extended Abbot's formula) was used to calculate the effectiveness of the treatments in terms of live larvae present in the treated ponds relative to the control pond at the time of sampling after treatment as a percentage:

$$\frac{N_t}{N_c} \times \frac{N_{co}}{N_{to}} \times 100$$

Where $N_t$ is the number of live larvae per dip in the treated site after treatment

$N_c$ is the number of larvae per dip in the control site after treatment of other sites has begun

$N_{to}$ is the number of larvae per dip in the treated site *before* treatment

$N_{co}$ is the number of larvae per dip in the control site *before* treatment of the other sites has begun

By 48 hours the treatment had reduced the number of larvae to 42.1% in section A, 24.4% in section B, and 17.3% in section C (corrected values) relative to control site.

Results from bioassays:
Abbot's formula was used to determine the corrected mortality in each set bioassays:

$$\% \text{ mortality} = 100 - \left( \frac{\% \text{ survival in treated sample} \times 100}{\% \text{ survival in control sample}} \right)$$

The mortality in each of the replicate bowls within each treatment differed considerably in the samples taken on the day of application, possibly due to uneven dispersion of the product as a consequence of the dense algae covering much of the water surface.

It was evident that the water samples from the treated sites were effective against the larvae with high mortalities after only 24 hours immersion. Practically complete mortality occurred after 96 hours immersion.

Conclusions
Both sets of data, from the dipping and bioassays clearly showed that the new formulation is highly effective against the British mosquito *Aedes detritus* even in sites with fairly high organic pollution and dense surface vegetation. The data from the dipping assays appeared to show a correlation between dosage and mosquito mortality. This was not apparent in the bioassay data. The bioassays show that the potency of the formulation is greatly reduced 24 hours after application, and is non-existent after 48%. This is probably due to the small particle size of the *Bti* resulting in it sinking very rapidly, and also biodegradation.

The following Examples will illustrate the invention:

Example 1
Effervescent Tablets (50% active ingredient)
Active ingredient: *Bacillus thuringiensis* var israelensis serotype H14.

| Ingredients | | % w/w |
|---|---|---|
| Active ingredient | 2,000 ITU/mg primary powder | *50.0% |
| Surface active dispersant | sodium dioctylsulphosuccinate | 15.0% |
| Tablet disintegrant | polyvinylpyrrolidone | 4.0% |
| Buoyancy aid | silica | 5.0% |
| Lubricant | magnesium stearate | 1.0% |
| Binder | microcrystalline cellulose | 9.0% |
| Effervescence) | citric acid (anhydrous) | 4.0% |
| Initiators) | sodium bicarbonate | to 100% |

\* To give a potency of 1,000 ITU/mg of tablet.

The tablet ingredients are mixed and compressed sufficiently to avoid crumbling during handling or in transit, but not so much as to cause the tablets to sink when applied to water. It has been found from measurements in the laboratory that a 5g tablet with the following dimensions meets the required standards:—

| | |
|---|---|
| Weight: | 5g +/− 0.25g |
| Length: | 40mm |
| Width: | 13.5mm |
| Thickness: | 12 +/− 0.60mm |

Moisture content:

The lowest possible moisture content is desirable to avoid deterioration of the tablets on storage. Moisture content is normally 2.5—3.5% as measured by the Dean & Stark method.

Effervescence:

The tablets should float within 5 seconds of being applied to water at 20°C and should start to effervesce immediately on the water surface.

Example 2
100 mg Mini-tablets (15% active ingredient)

| Ingredients | | % W/W |
|---|---|---|
| Active ingredient | 4,000 ITU/mg primary powder | *15.0% |
| Surface activve dispersant | sodium dioctylsulphosuccinate | 15.0% |
| Tablet disintegrant | polyvinylpyrrolidone | 4.0% |
| Buoyancy aid | silica | 5.0% |
| Lubricant | magnesium stearate | 1.0% |
| Binder | microcrystalline cellulose | 9.0% |
| Effervescence) | citric acid (anhydrous) | 12.0% |
| Initiators) | sodium bicarbonate | to 100% |

* To give a potency of 600 ITU/mg of tablet.

The tablets are compressed as in Example 1.

Example 3
Water dispersible granules (5% and 15% active ingredient)

| Ingredients | | 5.0% | 15.0% |
|---|---|---|---|
| Active ingredient | 4,000 ITU/mg primary powder | 5.0%** | 15.0%* |
| Surface active dispersant | sodium dioctylsulphosuccinate | 15.0% | 15.0% |
| Binder | microcrystalline cellulose | 5.0% | 5.0% |
| Filler | china clay | 2.0% | 2.0% |
| Granulating liquid | PEG 4000 (molten) approx | 13.0% | 13.0% |
| Effervescence) | Citric acid (anhydrous) | 15.0% | 12.5% |
| Initiators) | Sodium bicarbonate | to 100% | to 100% |

** To give a potency of 200 ITU/mg
* To give a potency of 600 ITU/mg

Moisture content: The lowest possible moisture content is desirable to avoid deterioration of the granules on storage. Moisture content is normally 2.5—3.5% as measured by the Dean & Stark method.

Effervescence: The granules should float within 5 seconds of being applied to water at 20°C and should start to effervesce immediately on the water surface.

Granule size: The granules are nominally 2mm in diameter and up to approximately 5mm in length, not more than 1% "fines" should pass a 1mm sieve.

Density: Bulk density is normally 0.55 +/−0.05 g/cm$^3$
Packing density is normally 0.60 +/−0.05 g/cm$^3$

7

Example 4

Controlled-Release Tubes and Cartridges

Controlled release tubes are solid biodegradable cardboard tubes packed with 3—4 small quantities of granules each separated by a thin layer of water soluble wax. The granules used are the 15% effervescent granules as described in the Example 3. The method of application is simply to toss one of the tubes into a mosquito infested pond. After a short time the water soluble wax plug in the top of the tube dissolves allowing the first batch of granules to come in contact with the water. The granules rise to the water surface, effervesce and disperse the Bt (or other insecticide) across the surface. Gradually over the next week to 10 days the second layer of water soluble wax dissolves allowing release of the second dose of insecticide and so on. The typical persistence of Bt in the environment is 2—3 days.

The water soluble wax normally used is polyethylene glycol (PEG) molecular weight 4000. Other molecular weight PEGs have been used and as a general rule the higher molecular weight waxes dissolve more slowly giving a longer interval between doses. Other factors affecting rate or time of release are water temperature (higher temperature leads to quicker release) and was thickness (thinner wax leads to quicker release). With these parameters in mind, a suitable formulation can be provided for any particular application.

**Claims**

1. A pesticidal formulation for the direct treatment of water infested with water-borne insect or plant pests comprising tablets, granules containing in their interior

    a. an effective amount of at least one biological pesticidal ingredient;

    b. at least one effervescence-initiating component; and

    c. at least one surface active dispersant;

    d. a lubricant;

    e. a binder;

    f. a disintegrant; and

    g. a low density buoyancy aid

wherein said biological pesticidal ingredient is a *Bacillus thuringiensis* var. *israelensis* preparation.

2. A formulation according to claim 1 containing an anionic surfactant as the surface active dispersant.

3. A method of controlling water-borne pests by dosing the infested water with a pesticidal formulation according to claim 1 or claim 2.

**Patentansprüche**

1. Schädlingsbekämpfungsmittel zur unmittelbaren Behandlung von Wasser, das von von dem Wasser getragenen Insekten- oder Pflanzenschädlingen befallen ist, und in Form von Tabletten oder Körnchen, die im Inneren enthalten

    a) einen wirksamen Betrag von wenigstens einem biologischen schädlingsbekämpfenden Bestandteil;

    b) wenigstens einen Schäumen in Gang setzenden Teil; und

    c) wenigstens ein oberflächenaktives Dispersionsmittel;

    d) ein Gleitmittel;

    e) ein Bindemittel;

    f) ein Lösemittel; und

    g) ein auftriebvermittelndes Hilfsmittel geringer Dichte, wobei der biologische schädlingsbekämpfende Bestandteil ein Bacillus-thuringiensis-var.-israelensis-Präparat ist.

2. Schädlingsbekämpfungsmittel nach Anspruch 1, das als oberflächenaktives Dispersionsmittel ein anionisches oberflächenaktives Agens enthält.

3. Verfahren zur Einschränkung von vom Wasser getragenen Schädlingen durch dosiertes Zugeben eines Schädlingsbekämpfungsmittels gemäß Anspruch 1 oder 2 zu befallenem Wasser.

**Revendications**

1. Une formulation pesticide pour le traitement direct de l'eau infestée par des insectes ou plantes parasites aquatiques comprenant des comprimés ou granules contenant à l'intérieur:

    a. une quantité efficace d'au moins un ingrédient pesticide biologique;

    b. au moins un composant inducteur d'effervescence; et

    c. au moins un dispersant tensioactif;

    d. un lubrifiant;

    e. un liant;

    f. un désagrégeant; et

    g. un auxiliaire de flottabilité de faible densité dans laquelle ledit ingrédient pesticide biologique est une préparation de Bacillus thuringiensis var. israelensis.

2. Une formulation selon la revendication 1, contenant un tensioactif anionique comme dispersant tensioactif.

3. Un procédé de lutte contre les parasites aquatiques par application dosée à l'eau infestée d'une formulation pesticide selon la revendication 1 ou 2.